# EUROPÄISCHE PATENTSCHRIFT

(11) **EP 2 330 065 B1**
(45) Veröffentlichungstag und Bekanntmachung des Hinweises auf die Patenterteilung: **18.09.2013**
(21) Anmeldenummer: 10190357.3
(22) Anmeldetag: 08.11.2010
(51) Int. Cl.: B65H 75/40, B65H 75/44, H02G 11/02

(54) **Leitungsführung und Kabel- oder Schlauchtrommel**
Conduit and cable or hose drum
Guidage de ligne et tambour pour câble ou tuyau

(30) Priorität: 07.12.2009 DE 202009017044 U
(43) Veröffentlichungstag der Anmeldung: 08.06.2011
(73) Patentinhaber: As - Schwabe GmbH, 72184 Eutingen (DE)
(72) Erfinder: Weingärtner, Kai, 72184, Eutingen (DE)
(74) Vertreter: Patentanwälte Ruff, Wilhelm, Beier, Dauster & Partner

(56) Entgegenhaltungen:
- EP-A2- 1 760 024
- DE-A1- 4 005 223
- DE-U1- 29 504 913
- DE-U1- 29 716 825
- GB-A- 2 423 979

## Beschreibung

Die Erfindung betrifft eine Leitungsführung für eine mindestens einen Standfuß aufweisende Kabel- oder Schlauchtrommel umfassend eine Führungsstange und mindestens zwei mit der Führungsstange gekoppelte Abstandshalter. Die Leitungsführung dient dem erleichterten Auf- und Abwickeln der Leitung auf die Kabel- oder Schlauchtrommel. Die Erfindung betrifft weiter Kabel- oder Schlauchtrommel mit einer Leitungsführung.

Eine Leitungsführung für eine Kabel- und/oder Schlauchtrommel ist beispielsweise aus der DE 199 63 879 A1 bekannt, wobei eine Führungsstange und zwei Abstandshalter einteilig als Führungsbügel ausgebildet sind, welcher an einem Standfuß oder Fußbügel angeordnet ist. Die Abmessung des Führungsbügels ist dabei so gewählt, dass ein Kabel oder ein Schlauch durch die Durchgangsöffnung zwischen dem Führungsbügel und dem Standfuß hindurch gleiten kann, nicht jedoch ein Stecker oder eine Kupplung am Ende des Kabels oder Schlauch. Der Führungsbügel ist einteilig, beispielsweise aus Metall oder Kunststoff, und mit dem Standfuß verbunden oder einteilig mit diesem ausgebildet.

Aus der EP 1 857 396 A1 ist eine Leitungsführung bekannt, welche aus zwei Halbschalen ausgebildet ist, die zur Anbringung an einem Standfuß mittels Schrauben miteinander verbindbar sind.

Aus der DE 297 16 825 U1 ist ebenfalls eine Leitungsführung für eine einen Standfuß aufweisende Kabeltrommel bekannt, umfassend einen Führungsbügel und zwei mit dem Führungsbügel fest verbundene Befestigungshalbschalen, wobei weiter zwei Halbschalen vorgesehen sind, welche mit dem Befestigungsschalen für eine Anbringung an dem Standfuß zusammenwirken.

Aus der GB 2 423 979 A ist eine Leitungsführung für eine einen Standfuß aufweisende Kabeltrommel umfassend eine Führungsstange und zwei Abstandshalter bekannt, wobei die Führungsstange mittels der Abstandshalter an dem Standfuß anbringbar ist. Die Abstandshalter weisen jeweils ein Klemmelement zum Verrasten mit dem Standfuß auf.

Aus der DE 295 04 913 U1 ist eine Leitungsführung mit einem im Wesentlichen L-förmigen Bügel bekannt, welcher an den Enden jeweils Befestigungsvorrichtungen für eine Verbindung mit einem Standrohr und einem Halterohr aufweist, wobei zur Verbindung mit dem Halterohr die zugehörige Befestigungsvorrichtung über das Standrohr auf das Halterohr aufgeschoben wird.

Es ist eine Aufgabe der vorliegenden Erfindung, eine Leitungsführung für eine Kabel- oder Schlauchtrommel zu schaffen, welche kostengünstig herstellbar ist und auf einfache Weise und mit hoher Stabilität an einem Gestell einer Kabel- oder Schlauchtrommel befestigbar ist. Es ist eine weitere Aufgabe der Erfindung, eine Kabel- oder Schlauchtrommel mit einer Leitungsführung zu schaffen.

Diese Aufgabe wird gelöst durch eine Leitungsführung für eine mindestens einen Standfuß aufweisende Kabel- oder Schlauchtrommel umfassend eine Führungsstange und mindestens zwei Abstandshalter, wobei die Führungsstange mittels der Abstandshalter an mindestens einem Standfuß anbringbar ist, wobei die Abstandshalter jeweils ein Klemmelement zum Verrasten mit dem Standfuß der Kabel- oder Schlauchtrommel aufweisen, und wobei ein an einem Ende der Führungsstange angeordnetes Stützelement vorgesehen ist, das mit einem Gestell der Kabel- oder Schlauchtrommel zum Abstützen einer Schwenkbewegung um den Standfuß verbindbar ist und das Klemmmittel zum Verrasten mit einer seitlichen Stange des Gestells aufweist.

Durch die Klemmelemente ist die Leitungsführung auf einfache Weise mit dem Gestell, genauer mit einem Standfuß des Gestells, verbindbar. Die Abstandshalter sind dabei derart dimensioniert, dass die Führungsstange im Wesentlichen parallel zu dem Standfuß anbringbar ist, wobei ein Abstand zwischen der Führungsstange und dem Standfuß so festgelegt ist, dass das Kabel oder der Schlauch durch die Durchgangsöffnung zwischen der Führungsstange und dem Standfuß führbar ist, wohingegen die Durchführung eines Steckerendes des Kabels oder eines Verbindungsstücks des Schlauchs verhindert ist.

Durch das Stützelement wird verhindert, dass die Leitungsführung beispielsweise aufgrund eines rauen Umgangs mit der Kabel- oder Schlauchtrommel und/oder aufgrund einer einwirkenden Kontaktkraft um den Standfuß verschwenkt. Durch Verrasten des Stützelements mit der seitlichen Stange wird ein unerwünschtes Verschwenken der Leitungsführung um den Standfuß sicher verhindert.

Die Aufgabe wird weiter gelöst durch eine Kabel- oder Schlauchtrommel umfassend ein Gestell mit mindestens einem Standfuß, einer seitlichen Stange und einer Trommelachse, wobei an dem Gestell eine erfindungsgemäße Leitungsführung angebracht ist und wobei die Leitungsführung an mindestens drei Haltebereichen mit dem Standfuß und der seitlichen Stange verrastet ist. Durch die drei Haltebereiche, auch als 3-Punkt-Halter bezeichnet, ist ein ungewünschtes Verschwenken oder Verschieben der Leitungsführung an dem Gestell im Gebrauch sicher verhindert.

Die Kabel- oder Schlauchtrommel weist in einer Ausgestaltung einen bügelförmigen Standfuß auf, wobei die Leitungsführung an einem Schenkel des Bügels anbringbar ist. In anderen Ausgestaltungen sind zwei oder mehr Standfüße vorgesehen, wobei die Leitungsführung an einem der Standfüße angebracht ist.

In einer vorteilhaften Ausgestaltung sind die Führungsstange und die Abstandshalter als getrennte Bauteile gestaltet. Dabei ist gemäß einem Ausführungsbeispiel vorgesehen, dass die Führungsstange und die Abstandshalter aus unterschiedlichen Materialien gefertigt sind. Beispielsweise ist die Führungsstange aus einem Material mit guten Gleiteigenschaften gefertigt, sodass nur geringe Reibeffekte zwischen der Leitung und der Leitungsführung auftreten. Die Abstandshalter sind dagegen aus einem Material mit einer ausreichenden Elastizität für eine einfache Verrastung gefertigt. Als Material für die Abstandshalter ist beispielsweise Polypropylen verwendbar.

In einer weiteren Ausgestaltung ist vorgesehen, dass die Klemmelemente als geschlitzte Zylinder gestaltet sind. Eine Größe und/oder eine Form des Innendurchmessers der Zylinder ist dabei entsprechend einer Form und Größe des Standfußes gestaltbar. In anderen Ausgestaltungen sind Adapterelemente vorgesehen, mit welchen die Klemmelemente an den Standfuß anpassbar sind. Die Klemmelemente sind in vorteilhaften Ausgestaltungen parallel zu der Führungsstange ausgerichtet. Der Schlitz der Klemmelemente liegt dabei vorzugsweise im Wesentlichen gegenüber der Führungsstange. Dadurch ist eine einfache Handhabung der Leitungsführung zum Anbringen an dem Standfuß durch Ergreifen der Führungsstange und Durchführen einer linearen Bewegung möglich.

Das Stützelement ist vorzugsweise als getrenntes Bauteil zu der Führungsstange gestaltet, beispielsweise aus dem gleichen Material wie die Abstandshalter. In anderen Ausgestaltungen ist das Stützelement einteilig mit der Führungsstange und/oder einem der Abstandshalter ausgebildet.

Weitere Vorteile der Erfindung ergeben sich aus den Unteransprüchen und aus der nachfolgenden Beschreibung von Ausführungsbeispielen der Erfindung, die in den Zeichnungen schematisch dargestellt sind. Für gleiche oder ähnliche Bauteile werden in den Zeichnungen einheitliche Bezugszeichen verwendet.

In den Zeichnungen zeigen:
- Fig. 1:: in einer perspektivischen Darstellung ein erstes Ausfüh-rungsbeispiel einer Kabel- oder Schlauchtrommel mit einer Leitungsführung;
- Fig. 2:: in einer Seitenansicht die Kabel- oder Schlauchtrommel ge-mäß Fig. 1;
- Fig. 3:: in einer Seitenansicht die Leitungsführung gemäß Fig. 1; und
- Fig. 4:: in einer Frontansicht die Leitungsführung gemäß Fig. 3.

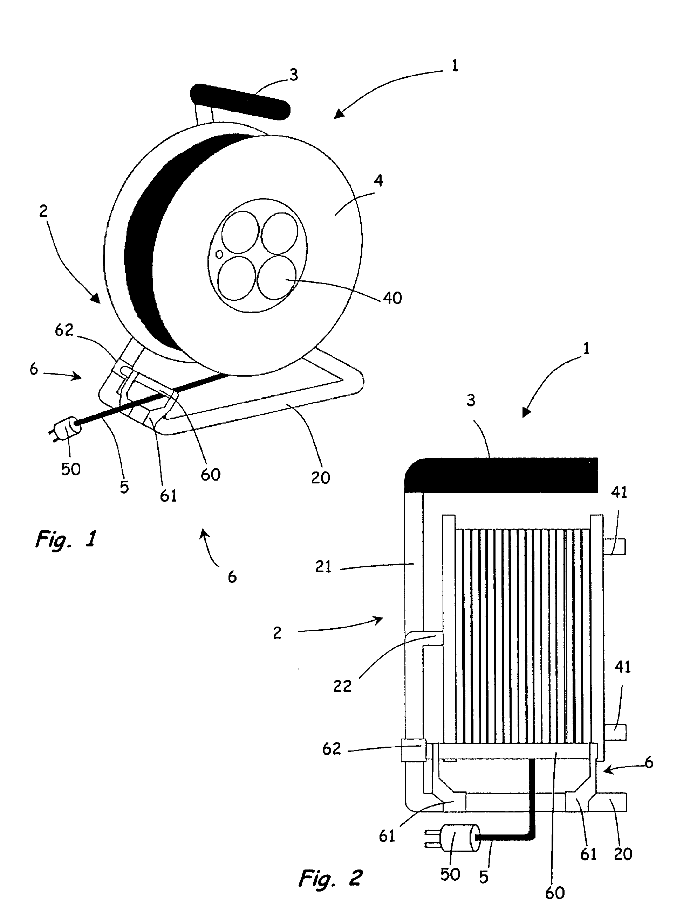

Fig. 1 und 2 zeigen schematisch eine Kabeltrommel 1 in einer perspektivischen Darstellung bzw. in einer Seitenansicht. Die Kabeltrommel 1 umfasst ein Gestell 2 mit einem Standfuß 20, einer seitlichen Stange 21 und einer Trommelachse 22. Der dargestellte Standfuß 20 ist als geschlossener Bügel gestaltet. An einem oberen Ende des Gestells 2 ist ein Handgriff 3 angeordnet. An der Trommelachse 22 ist ein Trommelkörper 4 drehbar gelagert. Auf den Trommelkörper 4 ist ein Kabel 5 aufgewickelt. Der dargestellte Trommelkörper 4 weist vier Steckdosen 40 zum Anschluss nicht dargestellter Geräte auf. Zum Drehen des Trommelkörpers 4 sind Drehgriffe 41 vorgesehen (nicht dargestellt in Fig. 1). Das Kabel 5 weist an seinem freien Ende einen Stecker 50 auf. An dem Gestell 2, genauer an dem Standbein 20 ist eine erfindungsgemäße Leitungsführung 6 angebracht, wobei das Kabel 5 wie dargestellt durch einen Zwischenraum zwischen dem Standbein 20 und der Leitungsführung 6 geführt ist.

In alternativen Ausgestaltungen ist eine Schlauchtrommel vorgesehen, wobei anstelle eines Kabels 5 ein Schlauch auf den Trommelkörper 4 aufwickelbar ist. Die Schlauchtrommel weist dabei ebenfalls eine Leitungsführung 6 auf.

Die Leitungsführung 6 umfasst eine Führungsstange 60 und zwei mit der Führungsstange 60 gekoppelte Abstandshalter 61. Die Abstandshalter 61 weisen an ihren freien, d.h. von der Führungsstange 60 abgewandten Enden jeweils ein Klemmelement zum Verrasten mit dem Standfuß 20 auf. Die in Fig. 1 und 2 dargestellte Leitungsführung 6 umfasst weiter ein Stützelement 62, mittels welchem die Leitungsführung 6 an der seitlichen Stange 21 verrastet ist. Die Leitungsführung 6 ist somit an drei Haltebereichen oder Klemmpunkten mit dem Gestell 2 verrastet. Durch die drei Haltebereiche ist eine sichere Verbindung gewährleistet, wobei ein Verschwenken der Leitungsführung 6 um den Standfuß 20 und ein ungewünschtes Verschieben verhindert ist.

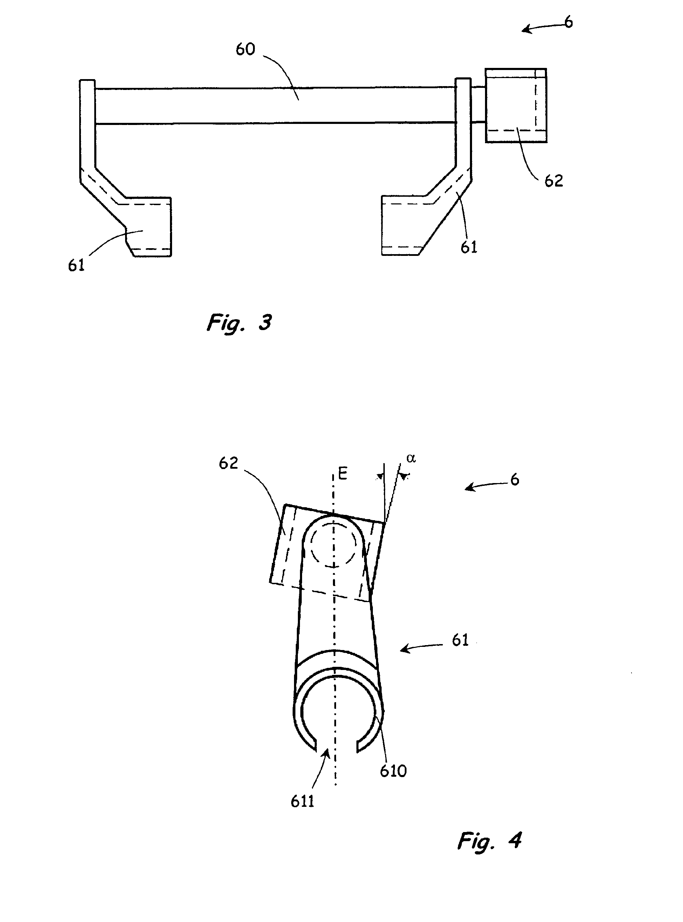

Fig. 3 und 4 zeigen im Detail die Leitungsführung 6 gemäß Fig. 1 und 2 in einer Seitenansicht bzw. einer Frontansicht. Die Führungsstange 60, die Abstandshalter 61 und das Stützelement 62 sind dabei als getrennte Bauteile ausgebildet und miteinander gekoppelt, beispielsweise miteinander verklebt.

Wie am besten in Fig. 4 erkennbar ist, weisen die Abstandshalter 61 an ihren freien Enden jeweils Klemmelemente 610 auf, welche als geschlitzte Zylinder gestaltet sind. Ein Schlitz 611 der Klemmelemente 610 verläuft dabei im Wesentlichen parallel zu der Führungsstange 60 und ist dieser gegenüberliegend an dem Abstandshalter 61 angeordnet. Das Stützelement 62 weist ebenfalls ein als geschlitzter Zylinder gestaltetes Klemmmittel auf. Der Zylinder des Stützelements 62 ist dabei bezüglich einer Ebene, in welcher Achsen der Führungsstange 60 und der Zylinder der Klemmelemente 610 liegen, um einen Winkel α geneigt. Dadurch ist es möglich, die Leitungsführungen an dem in Fig. 2 dargestellten Gestell 2 anzuordnen, ohne dass die Ebene E parallel zu der seitlichen Stange 21 verläuft. Der Winkel α ist entsprechend einer Gestaltung der Kabeltrommel 1, insbesondere in Abhängigkeit einer Größe des Trommelkörpers 4, eines Neigungswinkels der seitlichen Stange 21 und/oder eines Durchmessers des Kabels 5 geeignet gestaltet.

Zum Anbringen der Leitungsführung 6 an der Kabeltrommel 1 gemäß Fig. 1 ergreift ein Monteur beispielsweise die Führungsstange 60 und verrastet die Klemmelemente 610 mit dem Standfuß 20. Anschließend verschiebt er die Leitungsführung 6 in Richtung der seitlichen Stange 21, um das Stützelement 62 mit der seitlichen Stange 21 zu verrasten. Nach dem Verrasten ist eine robuste und stabile Kopplung gegeben. Dabei ist bei der Anbindung auf die Verwendung von Schrauben oder ähnliche Elemente, welche aufwändig Montageschritte erfordern, verzichtet. Muss das Kabel 5 ausgetauscht werden, so ist die Leitungsführung 6 zu diesem Zweck zerstörungsfrei von dem Gestell 2 lösbar.

## Patentansprüche

1. Leitungsführung für eine mindestens einen Standfuß (20) aufweisende Kabel- oder Schlauchtrommel (1) umfassend eine Führungsstange (60) und mindestens zwei Abstandshalter (61), wobei die Führungsstange (60) mittels der Abstandshalter (61) an mindestens einem Standfuß (20) anbringbar ist, wobei die Abstandshalter (61) jeweils ein Klemmelement (610) zum Verrasten mit dem Standfuß (20) der Kabel- oder Schlauchtrommel (1) aufweisen,
**dadurch gekennzeichnet, dass**
- ein an einem Ende der Führungsstange (60) angeordnetes Stützelement (62) vorgesehen ist,
- das mit einem Gestell (2) der Kabel- oder Schlauchtrommel (1) zum Abstützen einer Schwenkbewegung der Leitungsführung (6) um den Standfuß (20) verbindbar ist und das Klemmmittel zum Verrasten mit einer seitlichen Stange (21) des Gestells (2) aufweist.

2. Leitungsführung nach Anspruch 1, **dadurch gekennzeichnet, dass** die Führungsstange (60) und die Abstandshalter (61) als getrennte Bauteile gestaltet sind.

3. Leitungsführung nach Anspruch 1 oder 2, **dadurch gekennzeichnet, dass** die Klemmelemente (610) als geschlitzte Zylinder gestaltet sind.

4. Leitungsführung nach Anspruch 3, **dadurch gekennzeichnet, dass** ein Schlitz (611) der Klemmelemente (610) parallel zu der Führungsstange (60) und dieser gegenüberliegend an dem Abstandshalter (61) angeordnet ist.

5. Kabel- oder Schlauchtrommel umfassend ein Gestell (2) mit einem Standfuß (20), mindestens einer seitlichen Stange (21) und einer Trommelachse (22), **dadurch gekennzeichnet, dass** an dem Ge-stell (2) eine Leitungsführung nach einem der Ansprüche 1 bis 4 angebracht ist, wobei die Leitungsführung an mindestens drei Haltebereichen mit dem Standfuß (20) und der seitlichen Stange (21) verrastet ist.

## Claims

1. A guiding element for a cable or hose drum (1) including at least one pedestal (20) comprising a guiding rod (60) and at least two spacers (61), the guiding rod (60) being attachable by means of the spacers (61) to at least one pedestal (20), each of the spacers (61) having a clamping element (610) for snap-fixing to the pedestal (20) of the cable or hose drum (1),
**characterized in that**
- a support element (62) is provided and disposed on one end of the guiding rod (60),
- which support element is connectable to a frame (2) of the cable or hose drum (1) for supporting a pivoting movement of the conduit (6) around the pedestal (20), and has clamping means for snap-fixing to a lateral rod (21) of the frame (2).

2. The guiding element according to claim 1, **characterized in that** the guiding rod (60) and the spacers (61) are designed to be separate components.

3. The guiding element according to claim 1 or 2, **characterized in that** the clamping elements (610) are designed to be slotted cylinders.

4. The guiding element according to claim 3, **characterized in that** a slot (611) of the clamping elements (610) is disposed in parallel to the guiding rod (60) and opposite thereto on the spacer (61).

5. A cable or hose drum comprising a frame (2) having a pedestal (20), at least one lateral rod (21) and a drum axis (22), **characterized in that** a guiding element according to any one of the claims 1 to 4 is attached to the frame (2), wherein the guiding element is snap-fixed on at least three clamping zones to the pedestal (20) and the lateral rod (21).

## Revendications

1. Guide-câble pour un tambour pour câble ou tuyau flexible (1) comportant au moins un pied de support (20), comprenant une tringle de guidage (60) et au moins deux entretoises (61), la tringle de guidage (60) pouvant être amenée au niveau d'au moins un pied de support (20) par le biais des entretoises (61), les entretoises (61) comportant respectivement un élément de serrage (610) permettant de les bloquer au pied de support (20) du tambour pour câble ou tuyau flexible (1), **caractérisé en ce que** :
- un élément de maintien (62) est prévu au niveau d'une extrémité de la tringle de guidage (60) ;
- ledit élément de maintien pouvant être relié à un châssis (2) du tambour pour câble ou tuyau flexible (1) afin de soutenir un mouvement de pivotement du guide-câble (6) autour du pied de support (20) et comportant des moyens de serrage pour réaliser le blocage avec une tringle latérale (21) du châssis (2).

2. Guide-câble selon la revendication 1, **caractérisé en ce que** la tringle de guidage (60) et les entretoises (61) prennent la forme de composants séparés.

3. Guide-câble selon la revendication 1 ou 2, **caractérisé en ce que** les éléments de serrage (610) prennent la forme de cylindres fendus.

4. Guide-câble selon la revendication 3, **caractérisé en ce qu'**une fente (611) des éléments de serrage (610) est disposée parallèlement à la tringle de guidage (60) et à l'opposé de celle-ci par rapport aux entretoises (61).

5. Tambour pour câble ou tuyau flexible comprenant un châssis (2) doté d'un pied de support (20), d'au moins une tringle latérale (21) et d'un axe de tambour (22), **caractérisé en ce qu'**un guide-câble selon l'une quelconque des revendications 1 à 4 est placé sur le châssis (2), le guide-câble étant bloqué au niveau d'au moins trois zones d'arrêt par le biais du pied de support (20) et de la tringle latérale (21).
